# EUROPEAN PATENT APPLICATION

(11) **EP 1 795 067 A1**
(43) Date of publication of application: **13.06.2007**
(21) Application number: 06254638.7
(22) Date of filing: 06.09.2006
(51) Int. Cl.: A01G 9/16, A01G 9/24

(54) **Retractable greenhouse**

(30) Priority: 06.09.2005 US 219212
(71) Applicant: Devincenzo, John, San Luis Obispo, California 93401 (US)
(72) Inventor: DeVincenzo, John, San Luis Obispo CA 93401 (US); Hargett, Jacob Stephen, Arroyo Grande CA 93420 (US)
(74) Representative: Gee, Steven William

(57) **Abstract**

An agricultural greenhouse with a reversible covering that can be quickly mechanically opened and closed. The top cover (9) is attached to an endless cable system (12) and two side covers (7,8) are attached to upper and lower cable systems (23,30). Upon activation the cables cause the top and side covers to open in one direction and close in the opposite direction.

## Description

### BACKGROUND OF THE INVENTION

Large-scale greenhouse farming operations are becoming more popular as the demand for fresh fruits, vegetables, plants and plant products increases. It is not uncommon to find greenhouse farms covering 10-20 acres which include fixed, permanent structures and which cost upwards of$60,000 - 80,000 per acre to construct. These greenhouses are considered by farmers to be worth the investment for three reasons: first, earlier crops (the first of extremely perishable crops command premium prices), second, the decrease in weather related crop damage (e.g. rain, hail, fog, excess ~eat or sunlight) and third, the ability to extend the growing season (avoidance of freezing temperatures).

The third reason is most important in the northern latitudes and particularly in Canada, Northern Europe and the eastern coast of the United States. Using greenhouses in these regions requires permanent coverage for protection. However, for the first and second reasons mentioned earlier, removable greenhouse coverings would be adequate and thus would have a place in agriculture in the more southern latitudes of the United States, Mexico, Southern Europe and many parts of Asia.

The cost of removable cover greenhouses is approximately 10-20% of the cost of permanent structures if, during heavy winds, the covers can be removed. This decreased construction investment allows a vast number of farmers to utilize removable covers for reasons one and two above. For example, there are approximately 60,000 acres of early market strawberries grown in California. If farmers can bring their crops to market two weeks early, their per box return would be approximately double that of the later arriving fruit. The same applies to blueberries, blackberries, raspberries and cherries.

During the ripening period, just prior to and during picking, rain can completely destroy the ready to pick strawberries, blackberries and raspberries. This can be a devastating loss and, when it occurs, the price of the nondamaged commodity increases greatly. After about one week, undamaged fruit comes to maturity and harvest resumes. However, with respect to cherries, the entire crop can be lost.

### BRIEF SUMMARY OF THE INVENTION

It is the purpose of this invention to introduce a new concept in greenhouse agriculture where vast acreage can be covered and uncovered in a few minutes. Uncovering is beneficial when increased photosynthesis or spraying is desired. When winds become excessive to the point of potential damage to the covering, when not needed in the dormant season and when temperatures under the covers exceed critical levels and during fruit pollination and harvesting, the covers can be removed. Covering is desirable when heat accumulation is needed to break dormancy in deciduous fruits, whenever additional heat units are needed to hasten the ripening or growing process and to prevent damaging rains, hail and frost.

In the broadest aspect, this invention is intended to expand the use of greenhouse horticulture by providing a considerably less expensive structure since the covering can be easily and inexpensively removed and replaced as desired. More specifically, the removable greenhouse covering is divided into three portions, i.e., a top and two sides. The three parts slide back and forth together or separately, as desired, permitting exposure to unobstructed sunlight and wind, partial exposure or complete covering. When completely closed, inside temperatures will rise quickly compared to ambient temperature and the degree of increase can be somewhat controlled by the incremental opening of the roof or side coverings.

The ability to adjustably cover and uncover the greenhouse structure quickly, even several times per day, is provided by a series of high tensile wires supporting the three sections of covering (top and two sides) and providing guidance during the sliding operations. Cables, running twice the entire length of the greenhouse structure, which can be up to 1200 feet long, in increments of 36-48 feet, are attached at one end of the structure with a pulley at the opposite end and mechanically wound or unwound simultaneously by reels placed at one end of the greenhouse. The travel distance of approximately 36-48 feet can be accomplished in ten to thirty minutes depending on the energy requirements of the motors powering the reels. Covering of the plants is accomplished by the clockwise or counterclockwise rotation of a central shaft to which the reels are attached. One reel winds up the cable while the other reel simultaneously releases the cable.

Exposing the plants is accomplished by pushing the coverings toward the near support system by a yolk connected to the guide wires, the cables and the movable end of the coverings. The coverings collect at the immovable end much like an open shower curtain. In the open position, the three covers resemble a compressed accordion. On covering the greenhouse, the cable directions are reversed and the covers are pulled via the yolks, which are connected to the movable ends of the covers and to the cables.

The top cover of the greenhouse extends down the sides about two feet forming two short skirts. The two side covers hang to the ground at their inferior edge and are contained inside the short roof skirts so that rain is deflected to the outside and more heat can be trapped inside. The side covers are held firmly in place by grommets attached to superior and inferior wires of the rigid skeleton. To help stabilize the side covers from lateral wind force movement, a third wire at a vertical distance between the inferior and superior wires is disposed on the outside of each side cover. The roof cover is held in place by grommets attached to the skirt edges and to the guide wires. Additional wires support the roof cover so that water can runoff.

Temperature and wind monitors determine the degree of compression or extension of the covers. At one end of the greenhouse an electric motor provides the energy to compress or extend the covers. If desired, the side covers are partially opened to an amount sufficient to prevent the greenhouse temperature from exceeding a desired level.

Approximately every forty to fifty feet a support structure is required to stabilize the wires and provide a fixed end for the roof and side covers. This structure supports a superior fixed endoskeleton and inferior removable exoskeleton arms. The inferior exoskeleton arms are removable from the central vertical support structure and support the inferior wires of the side covers and the stabilizing wires. At harvest, the stabilizing wires and supporting exoskeleton must be removed to permit the pickers to reach into the trees or vines for harvesting the fruit.

The greenhouse covers single or multiple rows of crops depending on the width of the roof. A maximum height of about 15 feet is acceptable. At these heights, the sides, as independent parts of the greenhouse cover, are essential because of the great lateral forces placed on the sides by the wind. However, with a structure less than six feet tall, the sides can be combined with the roof in a single unit. This greatly reduces the cost since a number of grommets, cables and wires would be eliminated.

### BRIEF DESCRIPTION OF THE SEVERAL VIEWS OF THE DRAWINGS

In the drawings,
FIG. 1 is a perspective view showing the greenhouse covers fully retracted, partially retracted and fully extended;
FIG. 2 is an elevational view from one end of a single tunnel greenhouse;
FIG. 3 is a partial perspective view showing the roof cover;
FIG. 4 is a perspective view showing the greenhouse operating cables;
FIG. 5 is a partial perspective view of one of the side covers and the roof cover for a single tunnel greenhouse;
FIG. 6 is a top plan view of a single tunnel greenhouse;
FIG. 7 is a partial elevational view of the coupling means;
FIG. 8 is a partial perspective view of the roof cover;
FIG. 9 is a perspective view of a modification of the invention utilizing multiple roof cover units;
FIG. 10 is a view taken along the line 10-10 in FIG. 9;
FIG. 11 is a view taken along the line 11-11 in FIG. 9; FIG. 12 is an elevational view of the roof cover yoke;
FIG. 13 is a perspective view of the modification of the invention utilizing two different types of covers;
FIG. 14 is an enlarged perspective view of the modified roof covers; and
FIG. 15 is a schematic perspective view similar to FIG. 9 showing a modified form of the invention.

### DETAILED DESCRIPTION OF THE INVENTION

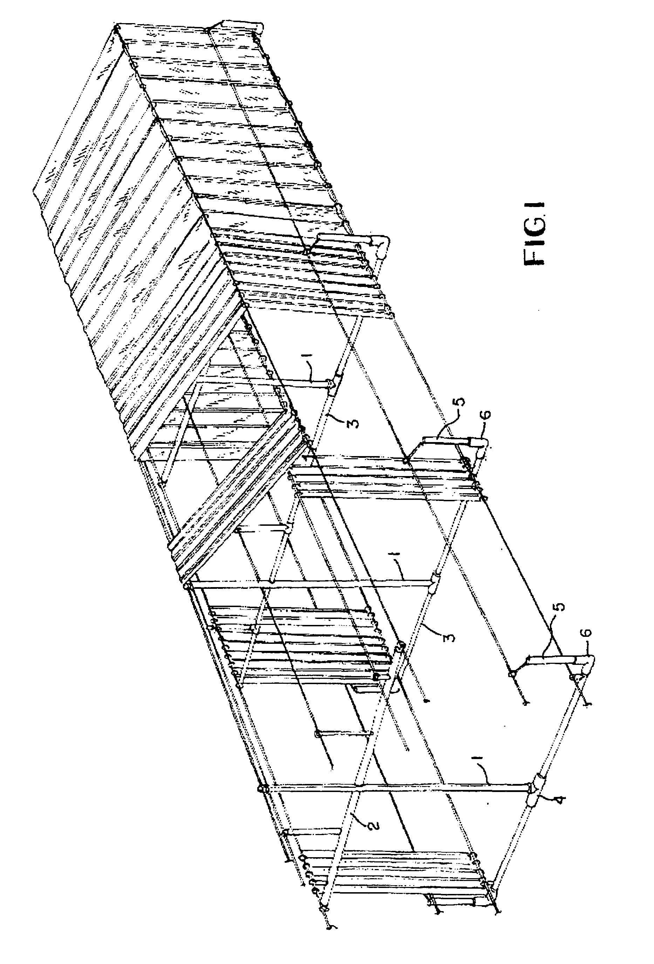

In the drawings and with particular reference to FIG. 1, the framework for the greenhouse is 4' shown in the form of multiple vertical posts 1, upper horizontal arms 2 and lower horizontal arms 3. Lower horizontal arms 3 are attached to vertical posts 1 by means of couplers 4. In addition, supplementary outer vertical posts 5 extend upwardly from the outer ends of lower horizontal arms 3 and are attached by means of angular couplers 6 to facilitate removal of the exoskeleton component during certain horticultural procedures. Similar inner vertical posts (not shown) can also be utilized with a corresponding inner stabilizing wire.

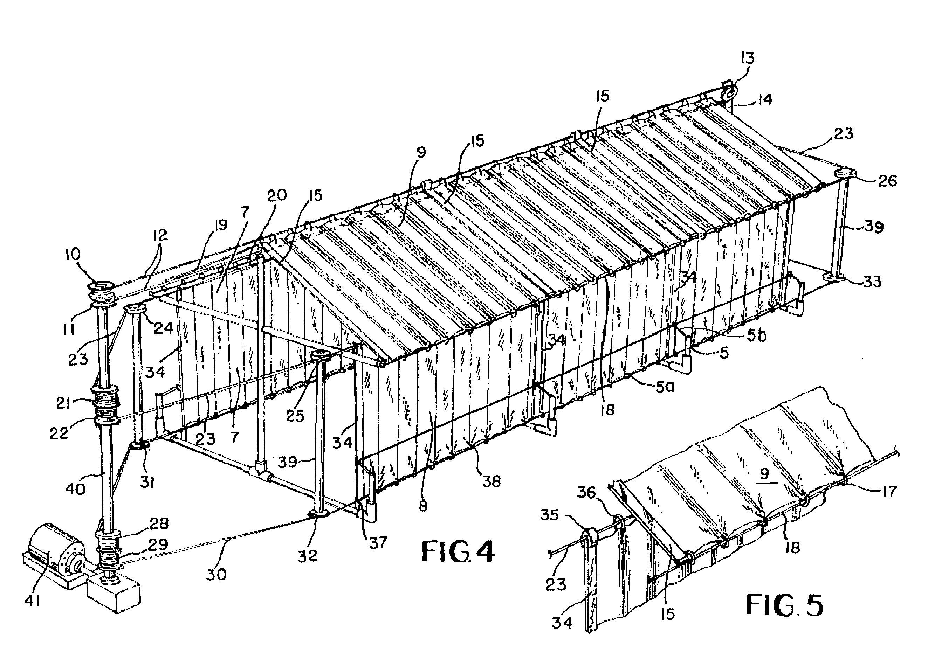

As best viewed in FIG.4, the operating system for the greenhouse for the purpose of moving side covers 7 and 8 and roof cover 9 is shown. Each of the side covers 7 and 8 comprises multiple individual panels each one of which extends between adjacent horizontal arms 2 and 3. Similarly, roof cover 9 comprises multiple individual inverted V -shaped covers each one of which extends between adjacent horizontal arms 2 and vertical posts 1.

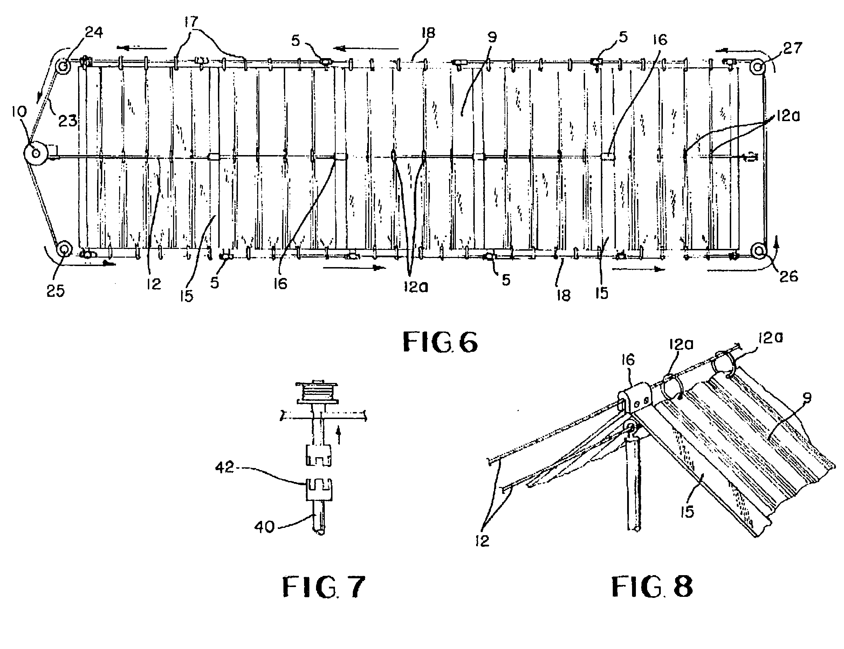

The operating mechanism for the greenhouse includes dual upper reels 10 and 11 with the ends of continuous cable 12 attached, respectively, to reels 10 and 11 (FIG. 4). The ends of cable 12 are attached to reels 10 and 11 such that when reels 10 and 11 rotate simultaneously, cable 12 is wound up on one of the reels and unwound from the other. Cable 12 extends the entire length of the greenhouse wherein, at the opposite end, it is guided around pulley 13 mounted on post 14. Yokes 15 are attached to one end edge of each individual panel of roof cover 9 and cable 12 is operably interconnected with yokes 15 by means of clamps 16 and extends through eyelets 12a attached to roof cover 9 as best shown in FIGS. 3 and 8.

The side edges of roof cover 9, in the single tunnel model, are secured by means of eyelets 17 which are slidably affixed to wire 18 at one side edge of roof cover 9 and on the opposite side to wire 19 by means of eyelets 20. Wires 18 and 19 are secured to the respective ends of upper horizontal arms 2 (FIGS. 4 and 5).

In similar fashion, the opening and closing mechanism for side covers 7 and 8 includes J middle dual reels 21 and 22. Cable 23 at each end is attached, respectively, to reels 21 and 22 such
that each end is wound and unwound in opposite directions. Cable 23 extends from reels 21 and 22
around guiding reels 24, 25, 26 and 27 (FIGS. 4 and 6).

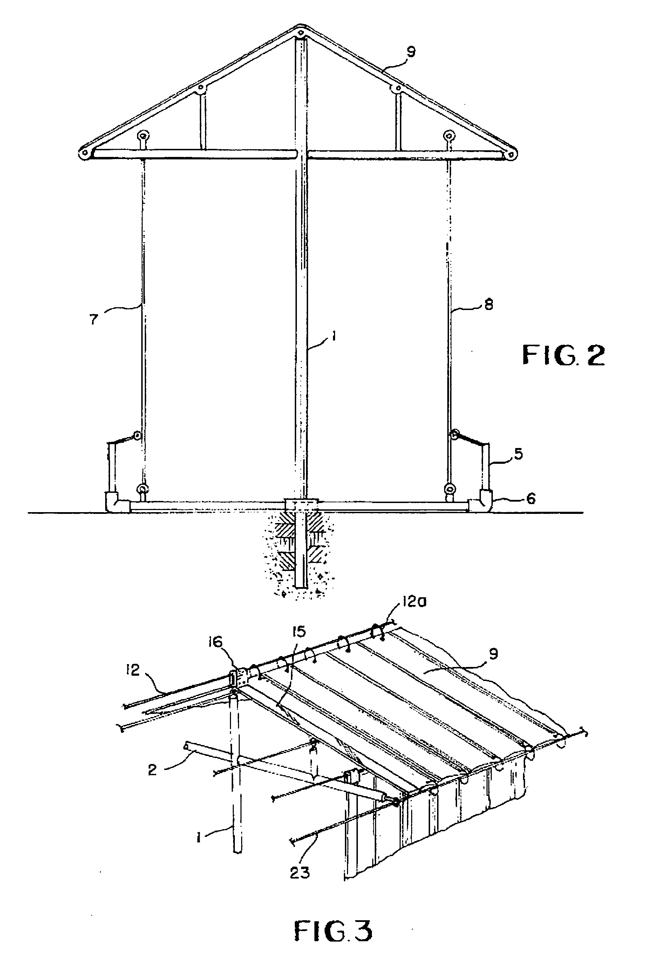

The lower opening and closing mechanism for side covers 7 and 8 is similar to the middle opening and closing mechanism and includes lower dual reels 28 and 29. The ends of cable 30 are
attached, respectively, to reels 28 and 29 such that as reels 28 and 29 rotate, cable 30 is wound up ; on one reel and unwound from the other reel. Cable 30 extends around guiding pulleys 31, 32 and
33 and a fourth guiding reel which is not shown in the drawings (FIG. 4). Lower horizontal arms 3 can be eliminated if they interfere with horticultural operations. Two additional short side posts can be placed in the ground similar to the single central post shown in FIG. 2. These posts would support lower cable 30 while upper cable 23 would remain supported by upper horizontal arms 2.

A vertical yoke 34 is affixed to one end edge of each individual side panel of side covers 7 and 8 and cable 23 is affixed to the upper end of vertical yoke 34 by means of clamp 35 and then extends around the greenhouse through eyelets 36 attached to the upper edge of each side cover 7 and 8. In similar fashion, cable 30 extends around the greenhouse and is attached to the lower end of vertical yoke 34 by means of clamp 37 and extends through eyelets 38. Supplemental external support wires 5a are attached to vertical posts 5 by means of extensions 5b. Supplemental internal support wires (not shown) could be utilized.
To complete the operating mechanism for the greenhouse, upper guiding pulleys 24 -27 are rotatably mounted on the upper ends of shafts 39 and lower guiding pulleys are rotatably mounted on the lower ends of shafts 39. Finally, reels 10, 11,21, 22, 28 and 29 are affixed to shaft 40 which is rotated in both directions depending on opening or closing desirability of the covers, by means of motor 41.

In order to better visualize the opening and closing of the side panels, an examination of FIG.
6 is helpful. Specifically, the moving cable, as the shaft rotates counterclockwise, opens the lower
side panel as shown in FIG. 6 by compressing this panel to the right while the upper side panel of FIG., 6 is compressed to the left. This is also seen in operation in FIG. 1. The upper portion of rotating shaft 40 is engaged or disengaged, as desired, depending on the desired position of the roof cover independent of the side covers (FIG. 7). This is accomplished by means of slip clutches and a solenoid mechanism 42 whereby either the side panels or the roof cover can be opened independently of each other.

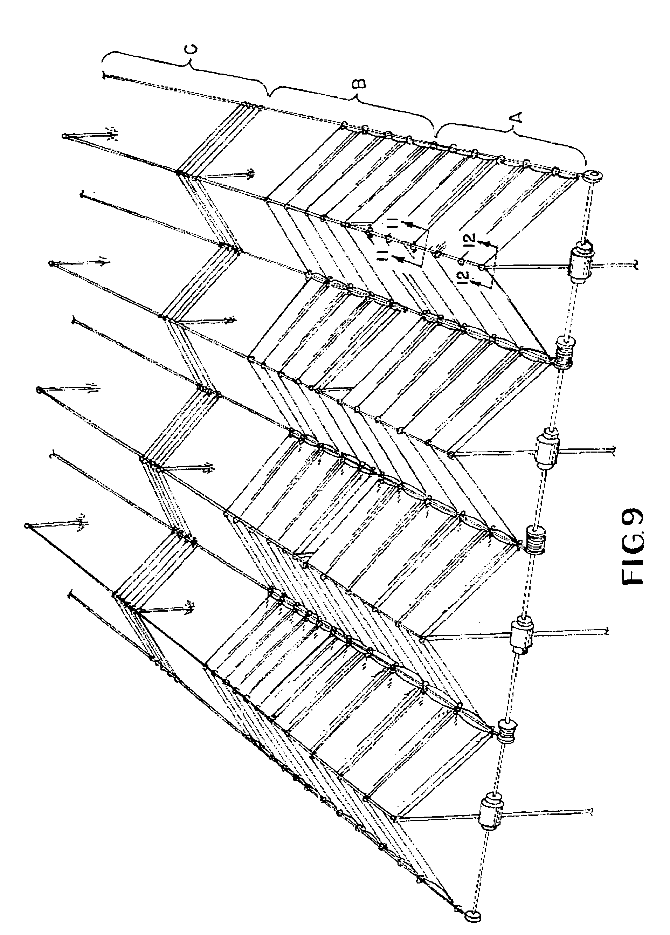

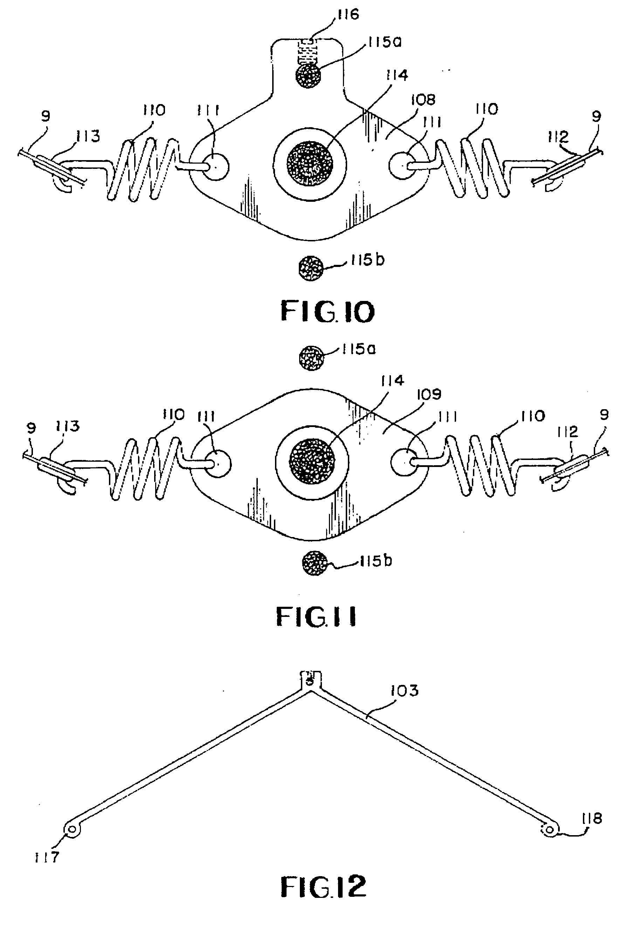

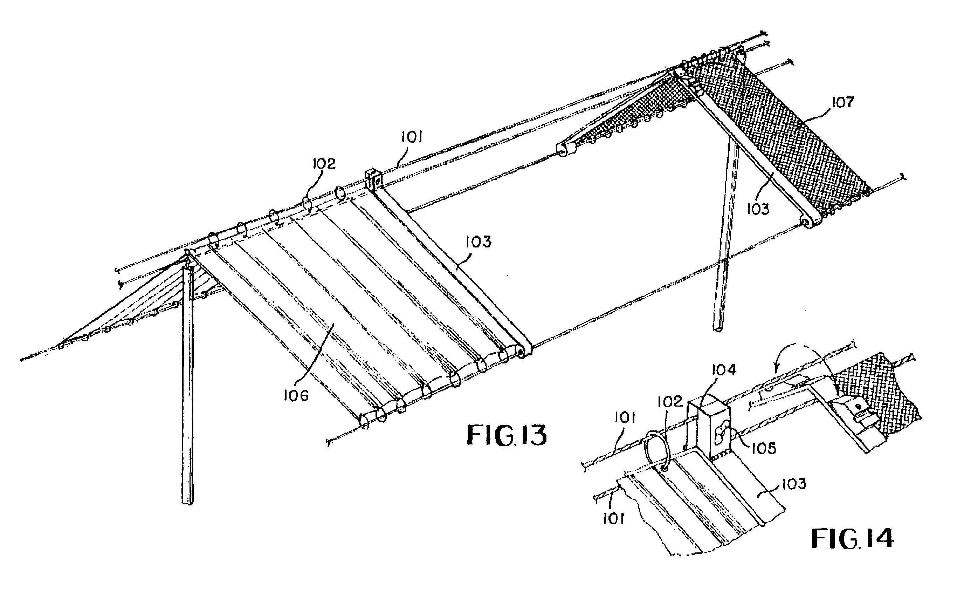

A modified version of the invention is shown in FIGS. 9-14 whereby the greenhouse is adapted to cover multiple rows of plants. FIG. 9 is a diagrammatic representation showing roof section A fully covered, section 13 partially covered and section C fully open. Of course, in actual practice only one of these conditions can exist at any given time. The cover opening and closing mechanism is essentially the same as shown in the version depicted in FIGS. 1-8 and includes roof cover opening and closing cable 101 which is adjoined to the apex of the roof cover by means of eyelets 102 (FIG. 13). Yoke 103 is attached to one end of each roof panel, as best shown in FIG. 13. Further, cable 101 is detachably secured to yoke 103 by means *of hinged* clamp 104 (FIG. 14). Clamp 104 is attached to cable 101 by rotating it to a closed position and securing it in position by means of thumb screw 105. By a reverse action, clamp 104 is detached from cable 101. Of course, any like clamping means could be utilized for the purpose of attaching yoke 103 to cable 101.

In accordance with this modification, and as shown in FIGS. 9-14, the greenhouse roof cover comprises a solid cover 106 and a separate porous cover 107. Each section of covers 106 and 107 includes a yoke 103 attached to one end thereof. By this means, when it is desired to fully enclose the plants for optimum heat, yoke 103 of cover 106 is attached to cable 101 by means of clamp 104. The operating mechanism is then engaged to cause cover 106 to be closed by means of cable 101. On the other hand, if it is desired to provide shade and a degree of ventilation, clamp 104 of cover 106 is detached from cable 101 and clamp 104 associated with cover 107 is attached to cable 101. Cable 101 is then activated so as to allow cover 107 to extend over the plants.

As best shown in FIGS. 10 and 11, attaching one roof cover to an adjoining roof cover is accomplished by means of attachments 108 and 109 which secure adjoining roof covers together by means of springs 110 wherein each is locked at one end to attachments 108 and 109 through apertures 111 and interlocked at the opposite ends, respectively, to adjoining roof covers 106 or 107 by means of eyelets 112 and 113.

Heavy wire 114 extends through the large center apertures of attachments 108 and 109. To constrict or expand roof covers 106 and 107 evenly additional cables 115a and 115b may be required. Attachment 108 includes locking mechanism 116 which secures attachment 108 to moving cable 11Sa. It is preferred that attachment 108 be positioned immediately adjacent peripheral yoke arms 117 and 118. Attachments 109 not in close proximity to yoke 103 would be spaced on heavy wire 114.

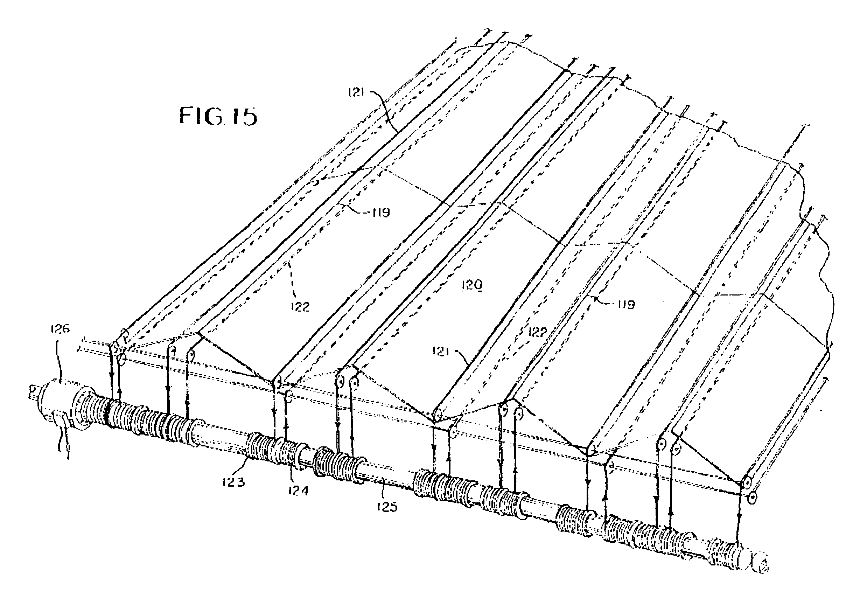

A modified form of the greenhouse is shown in FIG. 15 wherein multiple support wires 119 extend the length of the greenhouse from which roof cover 120 is suspended by means of grommets and the like (not shown) and as discussed in detail in connection with greenhouse shown in FIGS. 9-14. Roof cover 120 comprises multiple individual covers, for instance, as shown in FIG. 1. There are two operating cables in connection with each peak and valley of roof cover 120 which include compression cable 121 and extension cable 122. Each pair of cables 123 and 122 are wound in opposite directions on reels 123 and 124, respectively, and the opposite ends of cables 121 and 122 are joined to form one continuous cable which is secured on associated yoke, as previously discussed. Reels 123 and 124 are mounted on shaft 125 which is operatively connected to reversible electric motor 126. Therefore, as motor 126 is rotated in one direction, cable 121 is wound up on reel 123 and cable 122 is unwound on reel 124. By this means, roof cover 120 is compressed so as to open the greenhouse. When it is desired to cover the greenhouse, electric motor 126 is simply reversed thereby unwinding cable 121 on reel 123 and winding cable 122 up on wheel 124.

In operation, with the greenhouse cover closed, as shown in FIG. 4, when it is desired to open the green house, motor 41 is activated wherein shaft 40 is caused to rotate such that cables 12, 23 and 30 are caused to wind up, respectively, on reels 10,21 and 28. This action causes the side covers 7 and 8 and yoke 34 of each individual side panel 7 and 8 to move in the direction of the arrows shown in FIG. 6 to positions, wherein each side panel is compressed against the associated horizontal arms 2 and 3. Simultaneously, cable 12 rotates around pulley 13 such that yokes 15 push each individual panel of roof cover 9 which are compressed against the associated vertical post 1. Roof cover 9 is then fully opened as depicted in FIG. 1". When it is desired to close the greenhouse, motor 41 is simply reversed so that the operating cables move in the opposite direction so as to extend side covers 7 and 8 and roof cover 9 to a partially closed or fully closed condition, as desired.

Therefore, by this invention, a greenhouse is provided which is easily opened to the elements and provides the minimal wind resistance when fully opened, partially opened to cause the release of heat and which can be fully covered to provide maximum protection for the plants against rain, hail and other elements and provide maximum heat. The invention also includes the ability to utilize a pair of two different types of covers wherein one provides full protection heat accumulation with the ability to easily convert to a second cover that is porous in nature thereby providing necessary shade and desirable ventilation.

## Claims

1. A greenhouse comprising multiple vertical posts and horizontal arms interconnected to form a framework, multiple cables extending the length of said greenhouse and being interconnected to said framework, a top cover operably interconnected to at least one of said cables, and a pair of side covers interconnected respectively to two of said cables and extending downwardly generally from the sides of said top cover.

2. A greenhouse according to claim 1 wherein said at least one cable is interconnected to said top cover by means of a yoke and clamp assembly.

3. A greenhouse according to claim 1 wherein an operating cable at one end thereof is interconnected to one edge of said side covers respectively by means of a clamp.

4. A greenhouse according to claim 3 wherein a yoke is attached to said side edge and said clamp is attached to said yoke.

5. A greenhouse according to claim 1 wherein said one cable is attached at the ends thereof respectively to a pair of reels.

6. A greenhouse according to claim 1 wherein the end of each of said two cables are attached respectively to a pair of reels.

7. A greenhouse according to claim 2 wherein said yoke is attached to one side edge of said top cover.

8. A greenhouse according to claim 1 wherein said top cover comprises a solid cover and a separate porous cover.

9. A greenhouse according to claim 8 wherein said one cable is detachable from each of said covers.

10. A greenhouse according to claim 8 wherein said one cable is reattachable to either of said covers.

11. A greenhouse according to claim 1 wherein a pair of roof covers are di sposed side-by- side and are interconnected by means of an attachment and spring mechanism.

12. A greenhouse according to claim 11 wherein said attachment comprises a pair of spaced apertures formed therein to which said spring mechanism is attached.

13. A greenhouse according to claim 11 wherein said attachment includes at least one aperture and a support wire extends through said aperture.

14. A greenhouse according to claim 11 wherein said attachment and spring mechanism is moveable.

15. A greenhouse according to claim 1 wherein the ends of said cables are respectively wound up on reels.

16. A greenhouse according to claim 1 wherein at least one of said cables extends around pulleys.

17. A greenhouse according to claim 1 wherein said framework comprises a removable exoskeleton.

18. A greenhouse according to claim 1 wherein supplemental support wires are interconnected to said framework and extend substantially the length of said side covers.

19. A greenhouse according to claim 15 wherein said reels are mounted on a rotatable shaft.

20. A greenhouse according to claim 1 wherein said roof cover and said side covers are movable independently by means of a coupling mechanism.

21. A greenhouse according to claim 20 wherein said coupling mechanism comprises a solenoid and slip clutch combination.

22. A greenhouse according to claim 11 wherein said attachment comprises a clamping mechanism interconnected to the associated on of said cables.

23. A greenhouse according to claim 1 wherein supplemental support wires are not attached to said framework and extend substantially the length of said side covers.

24. A greenhouse according to claim 18 wherein said supplemental support wires are detachably interconnected to said framework.

25. A method of covering live plants comprising the steps of selectively moving a roof cover over said plants from an extended position to a compressed position and moving a pair of side covers selectively from extended positions to compressed positions.

26. A method according to claim 25 wherein said plants are disposed in a row and wherein said side covers extend respectively along opposite sides of said row.

27. A method according to claim 25 wherein a pair of top covers are disposed side-by-side and are interconnected to each other.
